# EUROPÄISCHE PATENTANMELDUNG

(11) **EP 3 199 030 A1**
(43) Veröffentlichungstag der Anmeldung: **02.08.2017**
(21) Anmeldenummer: 16000222.6
(22) Anmeldetag: 29.01.2016
(51) Int. Cl.: A21D 13/00

(54) **DAUERBACKWARE UND VERFAHREN ZU DEREN HERSTELLUNG**

(71) Anmelder: Bahlsen GmbH & Co. KG, 30163 Hannover (DE)
(72) Erfinder: Habbel, Martin, D-33647 Bielefeld (DE); Pietsch, Christine, D-30853 Langenhagen (DE)
(74) Vertreter: Bohmann, Armin K.

(57) **Zusammenfassung**

Die vorliegende Erfindung betrifft eine Dauerbackware mit einem oberen Gebäckteil (1), einem unteren Gebäckteil (2) und einer Zwischenschicht (3), wobei das obere Gebäckteil (1) eine Stärke S1 und in Draufsicht eine rechteckige Form aufweist, wobei die rechteckige Form definiert ist durch eine erste Kante mit einer Kantenlänge L11 und einer zu der ersten Kante mit einer Kantenlänge L 11 senkrechten zweiten Kante mit einer Kantenlänge L 12, die erste Kantenlänge L11 größer ist als die zweite Kantenlänge L 12, die erste Kantenlänge L11 60 mm oder weniger beträgt und das Verhältnis erste Kantenlänge L11 zu zweiter Kantenlänge L12 1,8 bis 2,4 beträgt; das untere Gebäckteil (2) eine Stärke S2 und in Draufsicht eine rechteckige Form aufweist, wobei die rechteckige Form definiert ist durch eine erste Kante mit einer Kantenlänge L21 und einer zu der ersten Kante mit einer Kantenlänge L21 senkrechten zweiten Kante mit einer Kantenlänge L22, die erste Kantenlänge L21 größer ist als die zweite Kantenlänge L22, die erste Kantenlänge L21 60 mm oder weniger beträgt und das Verhältnis erste Kantenlänge L21 zu zweiter Kantenlänge L22 1,8 bis 2,4 beträgt; und die Zwischenschicht (3) formstabil ist und zwischen dem oberen Gebäckteil (1) und dem unteren Gebäckteil (2) angeordnet ist, wobei die Kantenlänge L11 40 mm bis 60 mm, bevorzugter Weise 45 mm bis 60 mm, bevorzugter Weise 50 mm bis 55 mm und am bevorzugtesten 52 mm beträgt und/oder die Kantenlänge L21 40 mm bis 60 mm, bevorzugter Weise 45 mm bis 60 mm, bevorzugter Weise 50 mm bis 55 mm und am bevorzugtesten 52 mm beträgt.

## Beschreibung

Die vorliegende Erfindung betrifft eine Dauerbackware mit einem oberen Gebäckteil, einem unteren Gebäckteil und einer Zwischenschicht und ein Verfahren zu deren Herstellung.

Im Stand der Technik sind verschiedene sandwichartige Dauerbackwaren bekannt. Dabei ist typischerweise vorgesehen, dass zwischen zwei vorgebackenen Gebäckteilen eine flüssige, cremige oder pastöse Masse eingebracht wird, gegen welche die beiden Gebäckteile angelegt werden. Nach Erstarren, Aushärten oder einem ähnlichen Vorgang der zwischengelegten Masse sind die beiden Gebäckteilen fest mit dieser verbunden, so dass die Dauerbackware einen sandwichartigen Aufbau aufweist.

Die aus dem Stand der Technik bekannten Ausgestaltungsformen weisen den Nachteil auf, dass die Form oder Ausgestaltung der Füllung optisch meist nicht sehr ansprechend ist und deshalb den Käufer oder Konsumenten nicht anspricht. Die ungünstige Optik ergibt sich daraus, dass die Dosierung der cremigen oder flüssigen Füllung nicht immer ganz exakt ist. Weiterhin kann das Fließverhalten unterschiedlich sein, so dass die Füllung zur einen Seite des Sandwichgebäcks bis an dessen Rand vordringen oder sogar über die beiden Gebäckteile vorstehen kann, während andere Bereiche, insbesondere an den Ecken, nicht ausreichend ausgefüllt sind. Ein zusätzlicher Nachteil kann darin bestehen, dass die beiden Gebäckteile nicht exakt fluchtend zueinander angeordnet werden können, wodurch sich ein optisch ungenügendes und unerwünschtes Aussehen ergibt.

Im Stand der Technik sind des weiteren Ausführungsformen von sandwichartigen Dauerbackwaren bekannt, die dadurch hergestellt sind, dass in eine flüssige oder vorkristallisierte, in einer Form befindlichen Schokoladenmasse ein Keks eingelegt wird, welcher, zumindest zum Teil, in die Schokoladenmasse eindringt. Nach dem Ausformen der Schokolade muss dann ein weiterer Keks oder ein weiteres Gebäckteil auf der rückseitigen Fläche der Schokoladentafel angebracht werden. Ein derartiges Sandwichgebäck ist nicht symmetrisch aufgebaut. Weiterhin besteht der Nachteil, dass die Schokolade über den Rand der Gebäckteile vorsteht und zumindest das eingelegte Gebäckteil nicht exakt hinsichtlich seiner Lage positionierbar ist.

Die europäische Patentanmeldung EP 682 872 A 1 beschreibt eine Einlage für ein Nahrungsmittelprodukt, welche aus einer weichen Paste besteht, die eine hohe Viskosität und Klebrigkeit aufweist. Da derartige Pasten, die nachfolgend zu einem Lebensmittelprodukt weiterverarbeitet werden sollen, kontinuierlich hergestellt werden sollen, ergibt sich durch die hohe Viskosität und die Klebrigkeit das Problem der weiteren Verarbeitung bzw. des weiteren Handlings. Aus diesem Grunde werden die obere und die untere Fläche mit einer sehr dünnen Waffelschicht belegt, die lediglich zur Versiegelung der klebrigen Oberfläche dient. Das somit erhaltene Laminat-Produkt kann nachfolgend auf einfache Weise geschnitten oder gestampft und weiterverarbeitet werden. Die dünne Waffelbelegung dient somit lediglich dazu, die Klebrigkeit der Oberfläche der Paste und die sich daraus ergebenden Nachteile zu überwinden.

Das deutsche Patent DE 197 41 718 C1 betrifft eine Dauerbackware mit einem oberen und einem unteren, im Wesentlichen jeweils plattenförmigen Gebäckteil und mindestens einer zwischen diesen Gebäckteilen angeordneten plattenförmigen Zwischenschicht. Die plattenförmige Zwischenschicht ist formstabil und fest mit beiden Gebäckteilen verbunden. Diese sandwichartige Backware genügt in Folge der präzisen Relativanordnung des oberen und des unteren Gebäckteils zu der Zwischenschicht und der formstabilen Ausgestaltung der Zwischenschicht höchsten optischen Anforderungen.

Unabhängig davon besteht der Bedarf für eine sandwichartige Dauerbackware, die neben der Befriedigung dieser optischen Anforderungen den Verbraucher auch durch seine weitere Ausgestaltung anspricht.

Der Erfindung liegt daher die Aufgabe zu Grunde, eine sandwichartige Dauerbackware bereitzustellen, die eine den Verbraucher besonders ansprechende Ausgestaltung aufweist. Des Weiteren liegt der vorliegenden Erfindung die Aufgabe zu Grunde, eine sandwichartige Dauerbackware bereitzustellen, welche ein besonders vorteilhaftes Mundgefühl hervorruft. Schließlich liegt der vorliegenden Erfindung die Aufgabe zu Grunde, ein Verfahren zur Herstellung einer derartigen Dauerbackware bereitzustellen.

Diese Aufgaben werden erfindungsgemäß gelöst durch den Gegenstand der beigefügten unabhängigen Ansprüche. Bevorzugte Ausführungsformen ergeben sich aus den beigefügten Unteransprüchen.

Genauer werden diese Aufgaben auch gelöst durch die folgenden Ausführungsformen der erfindungsgemäßen Dauerbackware und den folgenden Ausführungsformen des erfindungsgemäßen Verfahrens zur Herstellung der erfindungsgemäßen Dauerbackware.
**Ausführungsform 1:** Dauerbackware mit einem oberen Gebäckteil (1), einem unteren Gebäckteil (2) und einer Zwischenschicht (3), wobei
   das obere Gebäckteil (1) eine Stärke S1 und in Draufsicht eine rechteckige Form aufweist, wobei die rechteckige Form definiert ist durch eine erste Kante mit einer Kantenlänge L11 und einer zu der ersten Kante mit einer Kantenlänge L11 senkrechten zweiten Kante mit einer Kantenlänge L12, die erste Kantenlänge L11 größer ist als die zweite Kantenlänge L12, die erste Kantenlänge L11 60 mm oder weniger beträgt und das Verhältnis erste Kantenlänge L11 zu zweiter Kantenlänge L12 1,8 bis 2,4 beträgt;
   das untere Gebäckteil (2) eine Stärke S2 und in Draufsicht eine rechteckige Form aufweist, wobei die rechteckige Form definiert ist durch eine erste Kante mit einer Kantenlänge L21 und einer zu der ersten Kante mit einer Kantenlänge L21 senkrechten zweiten Kante mit einer Kantenlänge L22, die erste Kantenlänge L21 größer ist als die zweite Kantenlänge L22, die erste Kantenlänge L21 60 mm oder weniger beträgt und das Verhältnis erste Kantenlänge L21 zu zweiter Kantenlänge L22 1,8 bis 2,4 beträgt; und
   die Zwischenschicht (3) formstabil ist und zwischen dem oberen Gebäckteil (1) und dem unteren Gebäckteil (2) angeordnet ist.
**Ausführungsform 2:** Dauerbackware nach Ausführungsform 1, wobei die Kantenlänge L11 40 mm bis 60 mm, bevorzugter Weise 45 mm bis 60 mm beträgt und/oder die Kantenlänge L21 40 mm bis 60 mm, bevorzugter Weise 45 mm bis 60 mm beträgt.
**Ausführungsform 3:** Dauerbackware nach einem der Ausführungsformen 1 bis 2, wobei dass die Kantenlänge L11 50 mm bis 55 mm und bevorzugter Weise 52 mm beträgt.
**Ausführungsform 4:** Dauerbackware nach einem der Ausführungsformen 1 bis 3, wobei die Kantenlänge L21 50 mm bis 55 mm und bevorzugter Weise 52 mm beträgt.
**Ausführungsform 5:** Dauerbackware nach einem der Ausführungsformen 1 bis 4, wobei das Verhältnis erste Kantenlänge L11 zu zweiter Kantenlänge L12 1,9 bis 2,3, bevorzugter Weise 2,0 bis 2,2 und bevorzugterer Weise 2,1 beträgt.
**Ausführungsform 6:** Dauerbackware nach einem der Ausführungsformen 1 bis 5, wobei das Verhältnis erste Kantenlänge L21 zu zweiter Kantenlänge L22 1,9 bis 2,3, bevorzugter Weise 2,0 bis 2,2 und bevorzugterer Weise 2,1 beträgt.
**Ausführungsform 7:** Dauerbackware nach einem der Ausführungsformen 1 bis 6, wobei die erste Kantenlänge L11 und die ersten Kantenlänge L21 gleich sind.
**Ausführungsform 8:** Dauerbackware nach einem der Ausführungsformen 1 bis 7, wobei das Verhältnis erste Kantenlänge L11 zu zweiter Kantenlänge L12 gleich dem Verhältnis erste Kantenlänge L21 zu zweiter Kantenlänge L22 ist.
**Ausführungsform 9:** Dauerbackware nach einem der Ausführungsformen 1 bis 8, wobei die erste Kantenlänge L11 52 mm beträgt, die erste Kantenlänge L21 52 mm beträgt, das Verhältnis erste Kantenlänge L11 zu zweiter Kantenlänge L12 2,1 beträgt und das Verhältnis erste Kantenlänge L21 zu zweiter Kantenlänge L22 2,1 beträgt.
**Ausführungsform 10:** Dauerbackware nach einem der Ausführungsformen 1 bis 9, wobei die Stärke S1 3,6 mm bis 6,0 mm, bevorzugter Weise 4,1 mm bis 5,5 mm, bevorzugterer Weise 4,5 mm bis 5,1 mm und am bevorzugtesten 4,8 mm beträgt.
**Ausführungsform 11:** Dauerbackware nach einem der Ausführungsformen 1 bis 10, wobei die Stärke S2 3,6 bis 6,0 mm, bevorzugter Weise 4,1 mm bis 5,5 mm, bevorzugterer Weise 4,5 mm bis 5,1 mm und am bevorzugtesten 4,8 mm beträgt.
**Ausführungsform 12:** Dauerbackware nach einem der Ausführungsformen 1 bis 11, wobei die Zwischenschicht (3) mit dem oberen Gebäckteil (1) und dem unteren Gebäckteil (2) mittels eines Fügeverfahrens verbunden ist.
**Ausführungsform 13:** Dauerbackware nach einem der Ausführungsformen 1 bis 12, wobei die Zwischenschicht (3) ein Schokolade umfassendes Material und/oder eine fetthaltige Masse umfassendes Material umfasst.
**Ausführungsform 14:** Dauerbackware nach einem der Ausführungsformen 1 bis 12, wobei die Zwischenschicht (3) ein Karamell umfassendes Material umfasst.
**Ausführungsform 15:** Dauerbackware nach einem der Ausführungsformen 1 bis 12, wobei die Zwischenschicht (3) ein Käse umfassendes Material umfasst.
**Ausführungsform 16:** Dauerbackware nach einem der Ausführungsformen 1 bis 12, wobei die Zwischenschicht (3) ein Gelee und/oder Marmelade umfassendes Material umfasst.
**Ausführungsform 17:** Dauerbackware nach einem der Ausführungsformen 1 bis 16, wobei die Zwischenschicht (3) mindestens eine sichtbare Seitenfläche (3a) umfasst, wobei die Seitenfläche (3a) eine glatte Oberfläche umfasst.
**Ausführungsform 18:** Dauerbackware nach einem der Ausführungsformen 1 bis 18, wobei die Zwischenschicht (3) einteilig oder einstückig ausgebildet ist.
**Ausführungsform 19:** Dauerbackware nach einem der Ausführungsformen 1 bis 18, wobei die Zwischenschicht (3) mehrteilig oder mehrstückig ausgebildet ist.
**Ausführungsform 20:** Dauerbackware nach einem der Ausführungsformen 1 bis 19, wobei das obere Gebäckteil (1) mindestens eine Seitenfläche (1a) umfasst, das untere Gebäckteil (2) mindestens eine Seitenfläche (2a) umfasst, und die Zwischenschicht (3) mindestens eine Seitenfläche (3a) umfasst, und wobei die mindestens eine Seitenfläche (1a), die mindestens eine Seitenfläche (2a) und die mindestens eine Seitenfläche (3a) parallel zu einander sind.
**Ausführungsform 21:** Dauerbackware nach Ausführungsform 20, wobei die mindestens eine Seitenfläche (1a), die mindestens eine Seitenfläche (2a) und die mindestens eine Seitenfläche (3a) mit einander fluchten.
**Ausführungsform 22:** Dauerbackware nach einem der Ausführungsformen 1 bis 20, wobei die mindestens eine Seitenfläche (1a) und/oder die mindestens eine Seitenfläche (2a) relativ zu der mindestens einen Seitenfläche (3a) vorstehen.
**Ausführungsform 23:** Dauerbackware nach einem der Ausführungsformen 1 bis 20, wobei die mindestens eine Seitenfläche (3a) relativ zu der mindestens einen Seitenfläche (1a) und/oder relativ zu der mindestens einen Seitenfläche (2a) vorsteht.
**Ausführungsform 24:** Dauerbackware nach einem der Ausführungsformen 1 bis 23, wobei die Zwischenschicht (3) eine Stärke S3 und in Draufsicht eine rechteckige Form aufweist, wobei die rechteckige Form definiert ist durch eine erste Kante mit einer Kantenlänge L31 und einer zu der ersten Kante mit einer Kantenlänge L31 senkrechten zweiten Kante mit einer Kantenlänge L32, die erste Kantenlänge L31 größer ist als die zweite Kante mit einer Kantenlänge L32, die erste Kantenlänge L31 60 mm oder weniger beträgt und das Verhältnis erste Kantenlänge L31 zu zweiter Kantenlänge L32 1,8 bis 2,4 beträgt.
**Ausführungsform 25:** Dauerbackware nach einem der Ausführungsformen 1 bis 24, wobei die Zwischenschicht (3) eine Stärke S3 und in Draufsicht eine rechteckige Form aufweist, wobei die rechteckige Form definiert ist durch eine erste Kante mit einer Kantenlänge L31 und einer zu der ersten Kante mit einer Kantenlänge L31 senkrechten zweiten Kante mit einer Kantenlänge L32, die erste Kantenlänge L31 größer ist als die zweite Kantenlänge L32, und die Kantenlänge L31 und/oder die Kantenlänge L32 gegenüber der Kantenlänge L 11 und/oder der Kantenlänge L12 und/oder der Kantenlänge L21 und/oder der Kantenlänge L22 um 2 bis 8 %, bevorzugter Weise um 3 bis 6 % und bevorzugterer Weise um 4 % entweder größer oder kleiner ist.
**Ausführungsform 26:** Dauerbackware nach Ausführungsform 25, wobei das Verhältnis der ersten Kantenlänge L31 zu der zweiten Kantenlänge L32 1,8 bis 2,4, bevorzugter Weise 1,9 bis 2,3, bevorzugterer Weise 2,0 bis 2,2 und am bevorzugtesten 2,1 beträgt.
**Ausführungsform 27:** Dauerbackware nach einem der Ausführungsformen 24 bis 26, wobei die Kantenlänge L31 40 mm bis 60 mm und bevorzugter Weise 45 mm bis 60 mm beträgt.
**Ausführungsform 28:** Dauerbackware nach einem der Ausführungsformen 24 bis 27, wobei die Kantenlänge L31 45 mm bis 55 mm und bevorzugter Weise 50 mm beträgt.
**Ausführungsform 29:** Dauerbackware nach einem der Ausführungsformen 24 bis 28, wobei die Stärke S3 der Zwischenschicht (3) 2,4 mm bis 4,0 mm, bevorzugter Weise 2,7 bis 3,7 mm, bevorzugterer Weise 3,0 bis 3,4 mm und am bevorzugtesten 3,2 mm beträgt.
**Ausführungsform 30:** Dauerbackware nach einem der Ausführungsformen 24 bis 29, wobei die Stärke S3 der Zwischenschicht (3) über die Zwischenschicht (3) im Wesentlichen konstant ist.
**Ausführungsform 31:** Dauerbackware nach einem der Ausführungsformen 24 bis 30, wobei die Zwischenschicht (3) zumindest eine Ausnehmung (32) umfasst.
**Ausführungsform 32:** Dauerbackware nach Ausführungsform 31, wobei die mindestens eine Ausnehmung (32) durch eine Schwächung des oder der die Zwischenschicht (3) ausbildenden Materials/Materialien erfolgt.
**Ausführungsform 33:** Dauerbackware nach Ausführungsform 32, wobei die Schwächung eine teilweise Schwächung ist.
**Ausführungsform 34:** Dauerbackware nach Ausführungsform 32, wobei die Schwächung eine vollständige Schwächung ist.
**Ausführungsform 35:** Dauerbackware nach einem der Ausführungsformen 1 bis 34, wobei die Masse der Zwischenschicht (3) an der Gesamtmasse der Dauerbackware 20 bis 80 Gew.-%, bevorzugter Weise 30 bis 70 Gew.-%, bevorzugterer Weise 35 bis 55 Gew.-% und am bevorzugtesten 41 Gew.-% ± 5 Gew.-% beträgt.
**Ausführungsform 36:** Dauerbackware nach einem der Ausführungsformen 1 bis 35, wobei die Zwischenschicht (3) Schokolade umfasst, bevorzugter Weise aus Schokolade besteht.
**Ausführungsform 37:** Dauerbackware nach einem der Ausführungsformen 1 bis 36, wobei das obere Gebäckteil und das untere Gebäckteil jeweils eine Länge von 52,0 ± 0,5 mm, eine Breite von 25,0 ± 0,5 mm und eine Stärke von 4,8 mm ± 0,2 mm aufweisen, die aus Schokolade hergestellte Zwischenschicht (3) ein Länge von 50,0 mm, eine Breite von 23,0 mm und eine Stärke von 3,2 mm aufweist, die Dauerbackware insgesamt eine Länge von 52,5 mm ± 0,5 mm, eine Breite von 25,0 mm ± 0,5 mm und eine Stärke von 12,8 mm ± 0,4 mm aufweist und der Gewichtsanteil der Zwischenschicht (3) 41 Gew.- % am Gesamtgewicht der Dauerbackware beträgt.
**Ausführungsform 38:** Verfahren zur Herstellung einer Dauerbackware umfassend ein oberes Gebäckteil (1), ein unteres Gebäckteil (2) und eine dazwischen angeordnete formstabile Zwischenschicht (3), wobei das Verfahren umfasst:
   - Bereitstellen des oberen Gebäckteils (1), des unteren Gebäckteils (2) und der Zwischenschicht (3) als separate Produkte, und
   - Verbinden des oberen Gebäckteils (1), des unteren Gebäckteils (2) und der Zwischenschicht (3),
   wobei die Zwischenschicht (3) zwischen dem oberen Gebäckteil (1) und dem unteren Gebäckteil (2) angeordnet ist und die Dauerbackware eine Dauerbackware nach einem der Ausführungsformen 1 bis 37 ist.
**Ausführungsform 39:** Verfahren nach Ausführungsform 38, wobei das Verbinden des oberen Gebäckteils (1), des unteren Gebäckteils (2) und der Zwischenschicht (3) mittels eines Fügeverfahrens erfolgt.
**Ausführungsform 40:** Verfahren zur Herstellung einer Dauerbackware umfassend ein oberes Gebäckteil (1), ein unteres Gebäckteil (2) und eine dazwischen angeordnete formstabile Zwischenschicht (3), wobei das Verfahren umfasst:
   - Bereitstellen eines ersten Gebäckteils, wobei die Zwischenschicht (3) mit dem ersten Gebäckteil verbunden ist und das erste Gebäckteil entweder das obere Gebäckteil (1) oder das untere Gebäckteil (2) ist, und
   - Verbinden der mit dem ersten Gebäckteil verbundenen Zwischenschicht (3) mit einem zweiten Gebäckteil, wobei das zweite Gebäckteil das untere Gebäckteil (2) in dem Fall ist, dass das erste Gebäckteil das obere Gebäckteil (1) ist, und wobei das zweite Gebäckteil das obere Gebäckteil (1) in dem Fall ist, dass das erste Gebäckteil das untere Gebäckteil ist,
   wobei die Zwischenschicht (3) zwischen dem oberen Gebäckteil (1) und dem unteren Gebäckteil (2) angeordnet ist und die Dauerbackware eine Dauerbackware nach einem der Ausführungsformen 1 bis 37 ist.
**Ausführungsform 41:** Verfahren nach Ausführungsform 40, wobei die Zwischenschicht (3) mit dem ersten Gebäckteil mittels eines Fügeverfahrens verbunden wird.
**Ausführungsform 42:** Verfahren nach einem der Ausführungsformen 40 bis 41, wobei die mit dem ersten Gebäckteil verbundene Zwischenschicht (3) mit dem zweiten Gebäckteil mittels eines Fügeverfahrens verbunden wird.

Der vorliegenden Erfindung liegt die überraschende Erkenntnis zu Grunde, dass die Dimensionierung einer sandwichartigen Dauerbackware, insbesondere wenn es sich um eine solche mit einem oberen Gebäckteil, einem unteren Gebäckteil und einer formstabilen, zwischen dem oberen Gebäckteil und dem unteren Gebäckteil angeordneten Zwischenschicht handelt, einen erheblichen Einfluss auf die Wahrnehmung des Verbrauchers hat und darauf, wie eine derartige Dauerbackware diesen anspricht. Neben der Absolutgröße der Dauerbackware kommt dabei dem Verhältnis der Kantenlängen des oberen Gebäckteils und des unteren Gebäckteils eine besondere Bedeutung zu. Daneben habe die vorliegenden Erfinder überraschender Weise festgestellt, dass diese beiden Kenngrößen der besagten Dauerbackware auch von entscheidendem Einfluss auf das Mundgefühl sind. In dem Fall eines eine, in Draufsicht, rechteckige Form aufweisenden oberen Gebäckteils beträgt die Länge der längeren Kante bevorzugter Weise zwischen 40 und 60 mm und das Längenverhältnis zwischen der längeren Kante und der kürzeren Kante, im Folgenden auch Kantenlängenverhältnis, 1,8 bis 2,4. Gleiches gilt für den Fall eines eine, in Draufsicht, rechteckige Form aufweisenden unteren Gebäckteils. Es ist gemäß der vorliegenden Erfindung bevorzugt, dass die Länge der Kanten des oberen Gebäckteiles identisch ist zu der Länge der Kanten des unteren Gebäckteils und/oder das Kantenverhältnis des oberen Gebäckteils identisch ist zu dem Kantenverhältnis des unteren Gebäckteils. In einer ganz besonders bevorzugten Ausführungsform ist vorgesehen, dass die Länge der Kanten des oberen Gebäckteiles identisch ist zu der Länge der Kanten des unteren Gebäckteils und das Kantenverhältnis des oberen Gebäckteils identisch ist zu dem Kantenverhältnis des unteren Gebäckteils.

Wie hierin verwendete bezeichnet S1 die Stärke des oberen Gebäckteils, L11 eine erste Kantenlänge des oberen Gebäckteils, L12 eine zweite Kantenlänge des oberen Gebäckteils, wobei die erste Kante des oberen Gebäckteils, in Draufsicht, im Wesentlichen senkrecht ist zu der zweiten Kante des oberen Gebäckteils. Entsprechend bezeichnet hierein S2 die Stärke des unteren Gebäckteils, L21 eine erste Kantenlänge des unteren Gebäckteils, L22 eine zweite Kantenlänge des unteren Gebäckteils, wobei die erste Kante des unteren Gebäckteils, in Draufsicht, im Wesentlichen senkrecht ist zu der zweiten Kante des unteren Gebäckteils. Die erste Kante eines Gebäckteils ist bevorzugter Weise länger als die zweite Kante. Infolge der rechteckigen Form des oberen Gebäckteils und des unteren Gebäckteils weisen diese tatsächlich jeweils zwei erste Kanten auf, die gleich lang sind und parallel zueinander verlaufen, und jeweils zwei zweite Kanten, die gleich lang sind und parallel zueinander verlaufen.

In einer Ausführungsform der erfindungsgemäßen Dauerbackware ist vorgesehen, dass die Stärke S1 des oberen Gebäckteils 3,6 mm bis 6,0 mm, bevorzugter Weise 4,1 mm bis 5,5 mm, bevorzugterer Weise 4,5 mm bis 5,1 mm und am bevorzugtesten 4,8 mm beträgt. In einer Ausführungsform der erfindungsgemäßen Dauerbackware ist vorgesehen, dass die Stärke S2 des unteren Gebäckteils 3,6 mm bis 6,0 mm, bevorzugter Weise 4,1 mm bis 5,5 mm, bevorzugterer Weise 4,5 mm bis 5,1 mm und am bevorzugtesten 4,8 mm beträgt. Es ist besonders bevorzugt, dass die Stärken S1 und S2 bei der erfindungsgemäßen Dauerbackware praktisch identisch sind. Im Zusammenhang mit der Stärke S1 des oberen Gebäckteils und der Stärke S2 des unteren Gebäckteils ist anzuerkennen, dass die diesbezügliche Herstellungstoleranz ca. 4% beträgt.

Bei der erfindungsgemäßen Dauerbackware handelt es sich bevorzugter Weise um eine Dauerbackware, die eine niedrige Gebäckfeuchte, bevorzugter Weise eine Gebäckfeuchte von < 3 %, und eine trockene, leicht knusprige Gebäckstruktur aufweist. In einer Ausführungsform gehört die erfindungsgemäße Dauerbackware somit gemäß der "DLG-Systematik Backwaren" zur Klasse der "feinen Backwaren" und genauer zur Untergruppe "Feinteige ohne Hefe". In einer Ausführungsform der erfindungsgemäßen Dauerbackware sind das obere und/oder das untere Gebäckteil eine Dauerbackware im vorstehenden Sinne, und weisen bevorzugter Weise eine niedrige Gebäckfeuchte, bevorzugter Weise von < 3 %, und eine trockene, leicht knusprige Gebäckstruktur auf. In einer Ausführungsform der erfindungsgemäßen Dauerbackware ist die Dauerbackware und/oder das erste Gebäckteil und/oder das zweite Gebäckteil verschieden von Biskuit oder Knäckebrot.

Das obere Gebäckteil und das untere Gebäckteil der erfindungsgemäßen Dauerbackware weisen eine rechteckige Form auf, insbesondere wenn von oben, d.h. in Draufsicht betrachtet. Das Weiteren sind das erste Gebäckteil und das zweite Gebäckteil im Wesentlichen plattenförmig ausgebildet. Die Plattenform wird durch die beiden ersten, im Wesentlichen gleich langen Kanten mit einer Kantenlänge L11 bzw. L21 und durch die beiden zweiten, im Wesentlichen gleich langen Kanten mit einer Kantenlänge L12 bzw. L22 bedingt, wobei eine jede erste Kante im Wesentlichen senkrecht zu den beiden zweiten Kanten ist und eine jede zweite Kante im Wesentlichen senkrecht zu den beiden ersten Kanten ist. Die Stärke der Platte wird durch die Stärke S1 des oberen Gebäckteils bzw. S2 des unteren Gebäckteils definiert. Die durch die Kantenlängen L11 und L12 bzw. den dazu gehörendenden Kanten definierte Fläche des oberen Gebäckteils weist eine obere Oberfläche, die von der Zwischenschicht abgewandt ist, und eine untere Oberfläche auf, die der Zwischenschicht zugewandt ist; die durch die Kantenlängen L21 und L22 beziehungsweise den dazugehörenden Kanten definierte Fläche des unteren Gebäckteils weist eine obere Oberfläche, die der Zwischenschicht zugewandt ist, und eine untere Oberfläche auf, die von der Zwischenschicht abgewandt ist. Mit anderen Worten, die Zwischenschicht ist zwischen der unteren Oberfläche des oberen Gebäckteils und der oberen Oberfläche des unteren Gebäckteils angeordnet. Die verschiedenen, nach außen gerichteten Kanten des oberen Gebäckteils können eine gleiche oder verschiedene Form aufweisen. Ebenso können die nach außen gerichteten Kanten des unteren Gebäckteils eine gleiche oder verschiedene Form aufweisen. In einer bevorzugten Ausführungsform ist vorgesehen, dass alle Kanten des oberen Gebäckteils die gleiche Form aufweisen, und alle Kanten des unteren Gebäckteils die gleiche Form aufweisen, und bevorzugterer Weise ist die Form der Kanten des oberen Gebäckteils und die Form der Kanten des unteren Gebäckteils gleich. Die Form der Kanten ist bevorzugter Weise ausgewählt aus der Gruppe umfassend glatte Kanten, gezahnte Kanten und gewellte Kanten; in einer bevorzugten Ausführungsform ist die Form einer Kante eine gezahnte Kante und in einer besonders bevorzugten Ausführungsform beträgt die Summe der Zähne aller Kanten des oberen Gebäckteils 34 und die Summe der Zähne aller Kanten des unteren Gebäckteils ebenfalls 34. Nachdem das obere Gebäckteil und das untere Gebäckteil eine Stärke S1 bzw. S2 aufweisen, stellen die jeweiligen Kanten des oberen Gebäckteils eine jeweilige Seitenfläche 1a und die jeweiligen Kanten des unteren Gebäckteils eine jeweilige Seitenfläche 2a dar.

In einer Ausführungsform der erfindungsgemäßen Dauerbackware ist vorgesehen, dass die von der Zwischenschicht abgewandte Oberfläche des oberen Gebäckteils eben ist. Alternative ist in einer Ausführungsform vorgesehen, dass die der Zwischenschicht abgewandte Oberfläche des oberen Gebäckteils, hierin auch als obere Oberfläche des oberen Gebäckteils bezeichnet, zumindest nicht vollständig eben ist. In dieser alternativen Ausführungsform kann vorgesehen sein, dass der nicht ebene Teil der Oberfläche eine oder mehrere Erhebungen aufweist, der nicht ebene Teil der Oberfläche eine oder mehrere Aussparungen aufweist oder der nicht ebene Teil der Oberfläche eine oder mehrere Erhebungen und eine oder mehrere Aussparungen aufweist. Es ist dabei im Rahmen der vorliegenden Erfindung, dass die eine oder mehrere Erhebungen ein oder mehrere Zeichen auf der Oberfläche oder einem Teil davon ausbilden. Es ist dabei auch im Rahmen der vorliegenden Erfindung, dass die eine oder mehrere Aussparungen ein oder mehrere Zeichen auf der Oberfläche oder einem Teil der Oberfläche ausbilden.

In einer Ausführungsform der erfindungsgemäßen Dauerbackware ist vorgesehen, dass die von der Zwischenschicht abgewandte Oberfläche des oberen Gebäckteils zumindest eine Schwächung aufweist. Diese Schwächung manifestiert sich bevorzugter Weise in einer geringeren Stärke S1 des oberen Gebäckteils. Die Schwächung kann dabei in der Form einer Linie, insbesondere bei Draufsicht auf das obere Gebäckteil, oder in Form einer Fläche ausgebildet sein. In einer bevorzugten Ausführungsform verläuft die die Schwächung ausbildende Linie von einem Punkt auf der ersten längeren Kante zu einem Punkt auf der zweiten längeren Kante, wobei bevorzugt ist, dass die Linie parallel zu den beiden kürzeren Kanten des rechteckigen oberen Gebäckteils verläuft. Es ist jedoch auch im Rahmen der vorliegenden Erfindung, dass die Linie nur über einen Teil der Oberfläche verläuft. In einer Ausführungsform ist vorgesehen, dass der Punkt auf der ersten längeren Kante, von dem die Linie ausgeht, in der Mitte der Kantenlänge L11 liegt und der Punkt auf der zweiten längeren Kante, auf den die Linie ausgerichtet ist, in der Mitte der Kantenlänge L11 liegt. Funktionell betrachtet dienen die Linie und die Fläche dazu, das Brechen oder Durchbeißen der erfindungsgemäßen Dauerbackware zu erleichtern. Alternativ kann die mindestens eine Schwächung auch auf der der Zwischenschicht zugewandten Oberfläche des oberen Gebäckteils, hierin auch als die untere Oberfläche des oberen Gebäckteils bezeichnet, angeordnet sein. Auch in diesem Falle kann die Schwächung wie vorstehend im Zusammenhang mit deren Anordnung auf der der Zwischenschicht abgewandten Oberfläche beschrieben realisiert sein. Es ist auch im Rahmen der vorliegenden Erfindung, dass die Schwächung zwar vorhanden, aber oberflächlich nicht sichtbar ist, insbesondere mit dem unbewaffneten Auge nicht sichtbar ist.

In einer Ausführungsform der erfindungsgemäßen Dauerbackware ist vorgesehen, dass die der Zwischenschicht zugewandte Oberfläche des oberen Gebäckteils eben ist. Alternativ kann die der Zwischenschicht zugewandte Oberfläche des oberen Gebäckteils eine oder mehrere Aussparungen aufweisen. Diese eine oder mehrere Aussparungen können dazu dienen, Füllmaterial aufzunehmen. Das Füllmaterial kann gleich oder verschieden sein von dem oder einem Material, aus dem die Zwischenschicht hergestellt ist oder besteht. In einer Ausführungsform ist vorgesehen, dass das Füllmaterial aus dem oder einem die Zwischenschicht ausbildenden Material stammt. Diese Aussparungen können somit der Fixierung oder Verbindung des oberen Gebäckteils mit der Zwischenschicht dienen. In einer Ausführungsform sind die Aussparungen durch Poren ausgebildet, die zumindest in der der Zwischenschicht zugewandten Oberfläche des oberen Gebäckteils vorhanden sind.

In einer Ausführungsform der erfindungsgemäßen Dauerbackware ist vorgesehen, dass die von der Zwischenschicht abgewandte Oberfläche des unteren Gebäckteils, hierin auch als untere Oberfläche des unteren Gebäckteils bezeichnet, eben ist. Alternative ist in einer Ausführungsform vorgesehen, dass die der Zwischenschicht abgewandte Oberfläche des unteren Gebäckteils zumindest nicht vollständig eben ist. In dieser alternativen Ausführungsform kann vorgesehen sein, dass der nicht ebene Teil der Oberfläche eine oder mehrere Erhebungen aufweist, der nicht ebene Teil der Oberfläche eine oder mehrere Aussparungen aufweist oder der nicht ebene Teil der Oberfläche eine oder mehrere Erhebungen und eine oder mehrere Aussparungen aufweist. Es ist dabei im Rahmen der vorliegenden Erfindung, dass die eine oder mehrere Erhebungen ein oder mehrere Zeichen auf der Oberfläche oder einem Teil davon ausbilden. Es ist auch im Rahmen der vorliegenden Erfindung, dass die eine oder mehrere Aussparungen ein oder mehrere Zeichen auf der Oberfläche oder einem Teil der Oberfläche ausbilden.

In einer Ausführungsform der erfindungsgemäßen Dauerbackware ist vorgesehen, dass die von der Zwischenschicht abgewandte Oberfläche des unteren Gebäckteils zumindest eine Schwächung aufweist. Diese Schwächung manifestiert sich bevorzugter Weise in einer geringeren Stärke S2 des unteren Gebäckteils. Die Schwächung kann dabei in der Form einer Linie, insbesondere bei Draufsicht auf das unteren Gebäckteil, oder in Form einer Fläche ausgebildet sein. In einer bevorzugten Ausführungsform verläuft die die Schwächung ausbildende Linie von einem Punkt auf der ersten längeren Kante zu einem Punkt auf der zweiten längeren Kante, wobei bevorzugt ist, dass die Linie parallel zu den beiden kürzeren Kanten des rechteckigen unteren Gebäckteils verläuft. Es ist jedoch auch im Rahmen der vorliegenden Erfindung, dass die Linie nur über einen Teil der Oberfläche verläuft. In einer Ausführungsform ist vorgesehen, dass der Punkt auf der ersten längeren Kante, von dem die Linie ausgeht, in der Mitte der Kantenlänge L21 liegt und der Punkt auf der zweiten längeren Kante, auf den die Linie ausgerichtet ist, in der Mitte der Kantenlänge L21 liegt. Funktionell betrachtet dienen die Linie und die Fläche dazu, das Brechen oder Durchbeißen der erfindungsgemäßen Dauerbackware zu erleichtern. Alternativ kann die mindestens eine Schwächung auch auf der der Zwischenschicht zugewandten Oberfläche des unteren Gebäckteils, hierin auch als die obere Oberfläche des unteren Gebäckteils bezeichnet, angeordnet sein. Auch in diesem Falle kann die Schwächung wie vorstehend im Zusammenhang mit deren Anordnung auf der der Zwischenschicht abgewandten Oberfläche beschrieben realisiert sein. Es ist auch im Rahmen der vorliegenden Erfindung, dass die Schwächung zwar vorhanden, aber oberflächlich nicht sichtbar ist, insbesondere mit dem unbewaffneten Auge nicht sichtbar ist.

In einer Ausführungsform der erfindungsgemäßen Dauerbackware ist vorgesehen, dass die der Zwischenschicht zugewandte Oberfläche des unteren Gebäckteils eben ist. Alternativ kann die der Zwischenschicht zugewandte Oberfläche des unteren Gebäckteils eine oder mehrere Aussparungen aufweisen. Diese eine oder mehrere Aussparungen können dazu dienen, Füllmaterial aufzunehmen. Das Füllmaterial kann gleich oder verschieden sein von dem Material, aus dem die Zwischenschicht hergestellt ist oder besteht. In einer Ausführungsform ist vorgesehen, dass das Füllmaterial aus dem oder einem die Zwischenschicht ausbildenden Material stammt. Diese Aussparungen können somit der Fixierung oder Verbindung des unteren Gebäckteils mit der Zwischenschicht dienen. In einer Ausführungsform sind die Aussparungen durch Poren ausgebildet, die zumindest in der der Zwischenschicht zugewandten Oberfläche des unteren Gebäckteils vorhanden sind.

Die Zwischenschicht der erfindungsgemäßen Dauerbackware ist formstabil. In einer Ausführungsform ist eine formstabile Zwischenschicht eine solche, bei der sich die Form bei bestimmungsgemäßem Gebrauch der erfindungsgemäßen Dauerbackware nicht ändert, insbesondere sich deren Dimensionen Höhe, Länge und/oder Breite nicht ändern. Bestimmungsgemäßer Gebrauch bedeutet herein bevorzugter Weise, das Handhaben der erfindungsgemäßen Dauerbackware durch den Verbraucher, insbesondere das zum Mundführen der erfindungsgemäßen Dauerbackware und/oder das Durchbeißen der erfindungsgemäßen Dauerbackware. In einer weiteren, von den vorstehenden Ausführungsformen betreffend die Formstabilität der Zwischenschicht unabhängigen Ausführungsform, die jedoch alternativ auch eine weitere Ausführungsform der vorstehenden Ausführungsformen betreffend die Formstabilität der Zwischenschicht sein kann, ist vorgesehen, dass die Formstabilität der Zwischenschicht sich darin äußert, dass beim Brechen oder Durchbeißen der Zwischenschicht ein Geräusch, bevorzugter Weise ein Knackgeräusch auftritt. In einer bevorzugten Ausführungsform ist die formstabile Zwischenschicht verschieden von einer creme-artigen oder pastösen Zwischenschicht.

In einer Ausführungsform der erfindungsgemäßen Dauerbackware ist vorgesehen, dass die Zwischenschicht eine Stärke S3 und in Draufsicht eine rechteckige Form aufweist, wobei die rechteckige Form definiert ist durch eine erste Kante mit einer Kantenlänge L31 und einer zu der ersten Kante mit einer Kantenlänge L31 senkrechten zweiten Kante mit einer Kantenlänge L32, und die erste Kantenlänge L31 größer ist als die zweite Kantenlänge L32. In einer Ausführungsform ist vorgesehen, dass die Zwischenschicht im Wesentlichen plattenförmig ausgebildet ist. Bei der Ausführungsform, bei der die Zwischenschicht rechteckig ist, ist vorgesehen, dass die Zwischenschicht tatsächlich zwei erste Kanten aufweist, die gleich lang sind und zueinander parallel verlaufen, und zwei zweite Kanten, die gleich lang sind und zueinander parallel verlaufen. Genauer wird die rechteckige Form durch die beiden ersten, im Wesentlichen gleich langen Kanten mit einer Kantenlänge L31 und durch die beiden zweiten, im Wesentlichen gleich langen Kanten mit einer Kantenlänge L32 bedingt, wobei eine jede erste Kante im Wesentlichen senkrecht zu den beiden zweiten Kanten ist, und eine jede zweite Kante im Wesentlichen senkrecht zu den beiden ersten Kanten ist. Die Stärke der Platte wird durch die Stärke S3 der Zwischenschicht definiert. Die durch die Kantenlängen L31 und L32 definierte Fläche der Zwischenschicht weist eine obere Oberfläche auf, die der unteren Oberfläche des oberen Gebäckteils zugewandt ist, und eine untere Oberfläche, die der oberen Oberfläche des unteren Gebäckteils zugewandt ist. Entsprechend ist die Zwischenschicht zwischen dem oberen Gebäckteil und dem unteren Gebäckteil so angeordnet, dass ihre oberen Oberfläche mit der unteren Oberfläche des oberen Gebäckteils und ihre untere Oberfläche mit der oberen Oberfläche des unteren Gebäckteils direkt oder indirekt in Kontakt ist.

In einer Ausführungsform ist vorgesehen, dass die Zwischenschicht wenigstens eine nach außen gerichteten Kante und damit Seitenfläche 3a aufweist, die sichtbar ist; es ist bevorzugt, dass alle nach außen gerichteten Kanten und damit alle Seitenflächen 3a der Zwischenschicht sichtbar sind. Die verschiedenen, nach außen gerichteten Kanten der Zwischenschicht können eine gleiche oder verschiedene Form aufweisen. In einer bevorzugten Ausführungsform ist vorgesehen, dass alle Kanten der Zwischenschicht die gleiche Form aufweisen. In einer bevorzugten Ausführungsform ist vorsehen, dass auch alle Kanten des unteren Gebäckteils die gleiche Form aufweisen und bevorzugterer Weise ist die Form der Kanten des oberen Gebäckteils und die Form der Kanten des unteren Gebäckteils gleich. In einer Ausführungsform ist vorgesehen, dass die Form der Kanten ausgewählt ist aus der Gruppe umfassend glatte Kanten, gezahnte Kanten und gewellte Kanten. In einer bevorzugten Ausführungsform sind alle Kanten der Zwischenschicht glatt. In einer bevorzugten Ausführungsform sind alle Kanten der Zwischenschicht glatt und alle Kanten des oberen Gebäckteils und des unteren Gebäckteils gezahnt; bevorzugter Weise beträgt die Summe der Zähne aller Kanten des oberen Gebäckteils 34 und die Summe der Zähne aller Kanten des unteren Gebäckteils ebenfalls 34. Nachdem die Zwischenschicht eine Stärke S3 aufweist, stellen die jeweiligen Kanten der Zwischenschicht eine jeweilige Seitenfläche 3a dar.

Die Zwischenschicht der erfindungsgemäßen Dauerbackware ist in einer Ausführungsform so ausgestaltet, dass die Stärke S3 über die gesamte Länge und die gesamte Breite konstant ist. In einer alternativen Ausführungsform ist die Stärke S3 der Zwischenschicht über die gesamte Länge und die gesamte Breite nicht konstant; in dieser Ausführungsform ist bevorzugt, dass die Zwischenschicht eine oder mehrere Ausnehmungen aufweist. Die eine oder mehrere Ausnehmungen können dabei auf der oberen Oberfläche der Zwischenschicht, auf der unteren Oberfläche der Zwischenschicht oder sowohl auf der oberen Oberfläche als auch der unteren Oberfläche der Zwischenschicht angeordnet sein. Alternativ können die eine oder mehreren Ausnehmungen so ausgebildet sein, dass dadurch eine vollständige Schwächung und damit Entfernung des die Zwischenschicht ausbildenden Materials erfolgt; in der Folge sind die Ausnehmungen als Löcher in der Zwischenschicht vorhanden. Diese Löcher in der Zwischenschicht können grundsätzlich an einer jeden Stelle der Zwischenschicht vorhanden sein. In einer bevorzugten Ausführungsform umfasst die Zwischenschicht ein oder mehrere Löcher, wobei die Löcher jeweils einzeln oder in ihrer Gesamtheit einen Rahmen ausbilden, der die Zwischenschicht darstellt. Dieser Rahmen ist in einer bevorzugten Ausführungsform einstückig ausgebildet; alternativ kann der Rahmen auch mehrstückig ausgebildet sein. In einer noch bevorzugteren Ausführungsform ist der Rahmen einstückig ausgeführt, wobei in der Ausführungsform, bei der die Zwischenschicht rechteckig ausgeführt ist, alle Seitenflächen 3a der Zwischenschicht parallel sind zu den jeweiligen Seitenflächen 1a und 2a des oberen Gebäckteils und des unteren Gebäckteils sind.

Es ist jedoch auch im Rahmen der vorliegenden Erfindung, dass die Zwischenschicht rechteckig ausgeführt ist, eine oder mehrere der Seitenflächen der Zwischenschicht jedoch als Wulst oder Randwulst ausgeführt sind. Es ist des Weiteren im Rahmen der vorliegenden Erfindung, dass die Zwischenschicht eine andere als eine rechteckige Form aufweist. In einer Ausführungsform der vorliegenden Erfindung ist vorgesehen, dass die Zwischenschicht, in Draufsicht, eine runde, ovale, polygonale oder sonstige Form aufweist.

Es ist im Rahmen der vorliegenden Erfindung, dass die Ausnehmungen in der Zwischenschicht in ihren verschiedensten Ausführungsformen dazu dienen, Füllmaterial aufzunehmen. Das Füllmaterial kann das gleiche Material sein wie das Material, aus dem die Zwischenschicht oder ein Teil der Zwischenschicht besteht. Alternativ kann das Füllmaterial von dem Material verschieden sein, aus dem die Zwischenschicht oder ein Teil der Zwischenschicht besteht. Es ist in einer Ausführungsform vorgesehen, dass das Füllmaterial in einer Menge vorhanden ist, so dass die Ausnehmung, unabhängig davon, ob die Ausnehmung als eine teilweise oder vollständige Schwächung des die Zwischenschicht ausbildenden Materials vorliegt, durch das Füllmaterial vollständig oder teilweise aufgefüllt wird, wobei die vollständige Auffüllung bevorzugt ist. Bei der vollständigen Auffüllung der Ausnehmung bildet die nicht ausgenommene Oberfläche der Zwischenschicht mit der Oberfläche der aufgefüllten Ausnehmung eine glatte oder ebene Oberfläche. Es ist jedoch im Rahmen der vorliegenden Erfindung, dass die Ausnehmung so ausgefüllt ist, dass die Auffüllung über die nicht ausgenommene Oberfläche der Zwischenschicht hinausragt; dabei ist bevorzugt, dass der dadurch bedingte Überstand von der Oberfläche des oberen bzw. unteren Gebäckteils, die dem Überstand zugewandt ist, aufgenommen wird. Diese Aufnahme kann bspw. dadurch erfolgen, dass die Oberfläche des oberen und/oder unteren Gebäckteils selbst eine geeignete Aussparung oder Ausnehmung aufweist oder das obere und/oder untere Gebäckteil den Überstand in die dem Überstand zugewandte Oberfläche aufnimmt. Dies kann bspw. durch eine Porenstruktur der zugewandten Oberfläche erreicht werden, insbesondere wenn die Menge des Überstandes vergleichsweise gering ist.

Das Material, aus dem die Zwischenschicht teilweise oder vollständig besteht oder hergestellt ist, ist bevorzugter Weise ausgewählt aus der Gruppe umfassend eine fetthaltige Masse, Schokolade, Karamell, Käse, Gelee und Marmelade und eine Mischung von einem oder mehreren davon. Bevorzugter Weise umfasst das Zwischenmaterial Schokolade oder ist aus Schokolade hergestellt.

Das Material, aus dem das Füllmaterial teilweise oder vollständig besteht oder hergestellt ist, ist bevorzugter Weise ausgewählt aus der Gruppe umfassend eine fetthaltige Masse, Schokolade, Karamell, Käse, Gelee und Marmelade und eine Mischung von einem oder mehreren davon. Bevorzugter Weise umfasst das Füllmaterial Schokolade oder ist aus Schokolade hergestellt.

Die Zwischenschicht ist mit dem oberen Gebäckteil und dem unteren Gebäckteil fest verbunden. In einer Ausführungsform ist vorgesehen, dass die feste Verbindung dazu führt, dass sich die Relativposition von oberem Gebäckteil, unterem Gebäckteil und Zwischenschicht bei bestimmungsgemäßem Gebrauch der erfindungsgemäßen Dauerbackware, d.h. insbesondere beim zum Mundführen und Durchbeißen der Dauerbackware durch den Verbraucher, nicht ändert. In einer bevorzugten Ausführungsform ist die feste Verbindung der Zwischenschicht das Ergebnis eines Fügeverfahrens und somit die Zwischenschicht mit dem obere Gebäckteil und dem unteren Gebäckteil verfügt, bevorzugter Weise fest verfügt. Wie bevorzugt hierin verwendet ist ein Fügeverfahren ein Verfahren gemäß DIN 8593. In einer bevorzugten Ausführungsform ist das Fügeverfahren ausgewählt aus der Gruppe umfassend Kleben, Zusammensetzen, Füllen und An- und Einpressen. In einer Ausführungsform der erfindungsgemäßen Dauerbackware erfolgt das Verbinden, bevorzugter Weise das Fügen, unter Verwendung eines Fügematerials. Das Fügematerial kann dabei ein solches sein, das gleich dem Material ist, aus dem die Zwischenschicht oder ein Teil davon hergestellt ist. Alternativ kann das Fügematerial verschieden sein von dem Material, aus dem die Zwischenschicht oder ein Teil davon hergestellt ist. Das Fügematerial kann von der Zwischenschicht bereitgestellt sein oder separat auf der Zwischenschicht, auf der unteren Oberfläche des oberen Gebäckteils und/oder auf der oberen Oberfläche des unteren Gebäckteils vorgesehen sein oder werden, wobei auch bei dieser Ausführungsform das Fügematerial entweder das gleiche ist wie jenes, aus dem die Zwischenschicht oder ein Teil davon hergestellt ist, oder verschieden ist von dem Material, aus dem die Zwischenschicht oder ein Teil davon hergestellt ist. In einer weiteren Ausführungsform ist das Fügematerial teilweise oder vollständig das Füllmaterial, wie es in einer Ausführungsform der erfindungsgemäßen Dauerbackware vorgesehen ist. In einer Ausführungsform ist weiter vorgesehen, dass die Zwischenschicht als Rahmen vorliegt und das Fügen durch Fügematerial wie vorstehend offenbart, oder durch das gleiche wie das die Zwischenschicht oder einen Teil davon ausbildende Material vermittelt wird, oder das Fügen durch Material vermittelt wird, das von der Zwischenschicht stammt.

In einer Ausführungsform der erfindungsgemäßen Dauerbackware ist vorgesehen, dass das Fügematerial auf einem oder mehreren Bereichen einer oder beider Oberflächen der Zwischenschicht vorgesehen ist, bspw. in Form von Rippen, Rändern, Noppen oder ähnlichen Strukturen. Die Form, in der das Fügematerial vorliegt, kann bspw. durch die Art und Weise der Herstellung oder Bereitstellung der Zwischenschicht bedingt sein.

Ergänzend oder alternativ zu den vorstehenden Ausführungsformen kann das Fügematerial aus einem jeglichen Material bestehen oder eine solches umfassen, welches geeignet ist, die Zwischenschicht mit dem oberen Gebäckteil und dem unteren Gebäckteil zu verbinden, bevorzugter Weise zu fügen. Beispielhaft sei hier auf essbare fetthaltige Materialen verwiesen.

Es wird von den Fachleuten auf dem Gebiet anerkannt werden, dass es gemäß der vorliegenden Erfindung bevorzugt ist, dass das obere Gebäckteil und das untere Gebäckteil, insbesondere wenn diese jeweils plattenförmig ausgeführt sind, parallel zu einander angeordnet sind. Es wird weiterhin von den Fachleuten anerkannt werden, dass das obere Gebäckteil, das unter Gebäckteil und die Zwischenschicht, insbesondere wenn diese alle jeweils plattenförmig ausgeführt sind, relativ zu einander parallel angeordnet sind. Die vorstehende Anordnung und/oder Verwendung des Fügematerials gewährleistet eben dies oder erfolgt so, dass dies gewährleistet ist. Neben der parallelen Anordnung ist es im Rahmen der vorliegenden Erfindung bevorzugt, dass die Anordnung des oberen Gebäckteils, des unteren Gebäckteils und der Zwischenschicht relativ zu einander plan ist, wodurch eine exakte Ausrichtung der Relativpositionen dieser drei Elemente und die erwünschte Geometrie der erfindungsgemäßen Dauerbackware und damit die hervorragende optische Erscheinung derselben gewährleistet wird.

In einer Ausführungsform der erfindungsgemäßen Dauerbackware ist vorgesehen, dass das obere Gebäckteil, das untere Gebäckteil und die Zwischenschicht eine rechteckige Form aufweisen, und alle Seitenflächen 3a der Zwischenschicht parallel zu den jeweiligen Seitenflächen 1a und 2a des oberen Gebäckteils und des unteren Gebäckteils sind. In einer weiteren ersten Ausführungsform davon ist vorgesehen, dass mindestens eine der Seitenflächen 3a der Zwischenschicht mit mindestens einer der korrespondieren Seitenflächen 1a des oberen Gebäckteils und mit mindestens einer der korrespondieren Seitenflächen 2a des unteren Gebäckteils fluchtet; bevorzugter Weise fluchten alle Seitenflächen 3a der Zwischenschicht mit den jeweils korrespondierenden Seitenflächen 1a des oberen Gebäckteils und mit den jeweils korrespondierenden Seitenflächen 2a des unteren Gebäckteils. In einer weiteren zweiten Ausführungsform davon ist vorgesehen, dass mindestens eine der Seitenflächen 3a der Zwischenschicht über mindestens eine der korrespondierenden Seitenflächen 1a des oberen Gebäckteils und/oder mindestens eine der korrespondierenden Seitenflächen 2a des unteren Gebäckteils vorsteht; bevorzugter Weise stehen alle Seitenflächen 3a der Zwischenschicht über alle der korrespondierenden Seitenflächen 1a des oberen Gebäckteils und/oder über alle der korrespondierenden Seitenflächen 2a des unteren Gebäckteils vor. In einer weiteren dritten Ausführungsform davon ist vorgesehen, dass mindestens eine Seitenfläche 1a des oberen Gebäckteils und/oder mindestens eine dazu korrespondierende Seitenfläche 2a des unteren Gebäckteils über mindestens eine korrespondierende Seitenfläche 3a der Zwischenschicht vorsteht, bevorzugter Weise stehen alle Seitenflächen 1a des oberen Gebäckteils und/oder alle Seitenflächen 2a des unteren Gebäckteils über alle Seitenflächen 3a der Zwischenschicht vor.

Wie vorstehend offenbart ist in einer Ausführungsform der erfindungsgemäßen Dauerbackware vorgesehen, dass auch die Zwischenschicht eine rechteckige Form aufweist, wobei durch die Dimensionierung der plattenförmigen Zwischenschicht Ausführungsformen erzeugt werden können, bei denen die Kanten bzw. die Seitenflächen der Zwischenschicht mit den Kanten bzw. den Seitenflächen des oberen Gebäckteils und/oder des unteren Gebäckteils fluchten, relativ zu den Kanten bzw. den Seitenflächen des oberen Gebäckteils und/oder des unteren Gebäckteils vorspringen oder die Kanten bzw. Seitenflächen des oberen Gebäckteils und/oder des unteren Gebäckteils relativ zu den Kanten bzw. den Seitenflächen der Zwischenschicht vorspringen. Für den Fall, dass die Seitenflächen aller Bestandteile, d.h. des oberen Gebäckteils, des unteren Gebäckteils und der Zwischenschicht mit einander fluchten, gelten die für das obere Gebäckteil und das untere Gebäckteil offenbarten Bemessungsregeln, d.h. die erste Kantenlänge beträgt 60 mm oder weniger, bevorzugter Weise 40 mm bis 60 mm, auch 45 mm bis 60 mm, bevorzugterer Weise 50 mm bis 55 mm und am bevorzugtesten 52 mm, und das Verhältnis der ersten Kantenlänge zu der zweiten Kantenlänge beträgt 1,8 bis 2,4, bevorzugter Weise 1,9 bis 2,3, bevorzugterer Weise 2,0 bis 2,2 und am bevorzugtesten 2,1. Bei der Ausführungsform, bei der die Kanten bzw. Seitenflächen des oberen Gebäckteils und des unteren Gebäckteils relativ zu den Kanten bzw. Seitenflächen der Zwischenschicht vorstehen, verringert sich, in einer Ausführungsform, die Kantenlänge L31 und/oder die Kantenlänge L32 der Zwischenschicht um 2% bis 8%, bevorzugter Weise um 3% bis 6% und bevorzugterer Weise um 4%, wobei das Verhältnis der ersten Kantenlänge L31 zu der zweiten Kantenlänge L32 1,8 bis 2,4, bevorzugter Weise 1,9 bis 2,3, bevorzugterer Weise 2,0 bis 2,2 und am bevorzugtesten 2,1 beträgt.

Bei einer Ausführungsform, bei der die Kanten bzw. Seitenflächen der Zwischenschicht relativ zu den Kanten bzw. Seitenflächen des oberen Gebäckteils und/oder des unteren Gebäckteils vorstehen, erhöhen sich die Kantenlängen L31 der Zwischenschicht um 2% bis 8%, bevorzugter Weise um 3% bis 6% und bevorzugterer Weise um 4%, wobei das Verhältnis der ersten Kantenlänge L31 zu der zweiten Kantenlänge L32 1,8 bis 2,4, bevorzugter Weise 1,9 bis 2,3, bevorzugterer Weise 2,0 bis 2,2 und am bevorzugtesten 2,1 beträgt.

In einer Ausführungsform der erfindungsgemäßen Dauerbackware ist vorgesehen, dass die Stärke S3 der Zwischenschicht 2,4 mm bis 4,0 mm beträgt, bevorzugter Weise 2,7 mm bis 3,7 mm, bevorzugterer Weise 3,0 mm bis 3,4 mm und am bevorzugtesten 3,2 mm beträgt. Im Zusammenhang mit der Stärke S3 der Zwischenschicht ist anzuerkennen, dass die diesbezügliche Herstellungstoleranz abhängig von dem Material der Zwischenschicht ca. 1 % bis 4% beträgt.

In einer Ausführungsform der erfindungsgemäßen Dauerbackware ist vorgesehen, dass der Anteil der Masse der Zwischenschicht an der Gesamtmasse der erfindungsgemäßen Dauerbackware etwa 20 Gew.-% bis 80 Gew.-%, bevorzugter Weise 30 Gew.-% bis 70 Gew.-%, bevorzugterer Weise 35 Gew.-% bis 55 Gew.-% und am bevorzugtesten 41 Gew.-% ± 5 Gew.-% beträgt; bevorzugter Weise besteht dabei die Zwischenschicht aus Schokolade.

In einer besonders bevorzugten Ausführungsform der erfindungsgemäßen Dauerbackware weist das erste Gebäckteil und das zweite Gebäckteil jeweils eine Länge von 52,0 ± 0,5 mm, eine Breite von 25,0 ± 0,5 mm und eine Höhe d.h. Stärke von 4,8 mm ± 0,2 mm auf, die aus Schokolade hergestellte Zwischenschicht ein Länge von 50,0 mm, eine Breite von 23,0 mm und eine Höhe, d.h. Stärke von 3,2 mm, die erfindungsgemäße Dauerbackware eine Länge von 52,5 mm ± 0,5 mm, eine Breite von 25,0 mm ± 0,5 mm und eine Höhe, d.h. Stärke von 12,8 mm ± 0,4 mm; bei dieser Ausführungsform beträgt der Gewichtsanteil der Zwischenschicht und damit der Schokolade 41 % am Gesamtgewicht der erfindungsgemäßen Dauerbackware.

In einem zweiten Aspekt betrifft die vorliegende Erfindung ein Verfahren zur Herstellung einer erfindungsgemäßen Dauerbackware umfassend ein oberes Gebäckteil und ein unteres Gebäckteil mit einer dazwischen angeordneten Zwischenschicht. Das erfindungsgemäße Verfahren sieht die Bereitstellung eines oberen Gebäckteils, eines unteren Gebäckteils und einer Zwischenschicht vor, die miteinander mittels eines Fügeverfahrens so verbunden werden, dass die Zwischenschicht zwischen dem oberen Gebäckteil und dem unteren Gebäckteil angeordnet ist. Die Ausgestaltung des oberen Gebäckteils, des unteren Gebäckteils und der Zwischenschicht ist dabei bevorzugter Weise so, wie vorstehend im Zusammenhang mit der erfindungsgemäßen Dauerbackware beschrieben. Die erfindungsgemäße Dauerbackware wird entsprechend diesem Verfahren aus den drei Komponenten oberes Gebäckteil, unteres Gebäckteil und Zwischenschicht hergestellt, wobei diese in einer Ausführungsform für sich jeweils unabhängig hergestellt sind.

Im Zusammenhang mit diesem erfindungsgemäßen Verfahren ist es vorteilhaft, wenn die Zwischenschicht als vorgefertigtes Element hergestellt wird. Insbesondere hinsichtlich der Zwischenschicht können somit Produktionsschritte vorgesehen sein, die speziell auf die Zwischenschicht abgestimmt sind, nicht jedoch die Herstellung der Gebäckteile oder das nachfolgende Zusammenfügen der beiden Gebäckteile mit der Zwischenschicht berücksichtigen müssen. Dies bedeutet, dass die Zwischenschicht, welche wie vorstehend offenbart ausgeführt sein kann, in geeignete Formen gegossen werden kann. Das Herstellungsverfahren für die Zwischenschicht kann unabhängig von den Gebäckteilen überwacht und gesteuert werden. Dabei erweist es sich insbesondere als vorteilhaft, das die Seitenflächen der Zwischenschicht, welche bei der erfindungsgemäßen Dauerbackware in einer bevorzugten Ausführungsform sichtbar sind, in gezielter und beeinflussbarer Weise ausgebildet sein können.

In einem dritten Aspekt betrifft die vorliegende Erfindung ein Verfahren zur Herstellung einer erfindungsgemäßen Dauerbackware umfassend ein oberes Gebäckteil und ein unteres Gebäckteil mit einer dazwischen angeordneten Zwischenschicht, wobei vorgesehen ist, dass ein erstes Gebäckteil bereitgestellt wird, wobei an dem ersten Gebäckteil die Zwischenschicht bereits vorgesehen ist und in einem weiteren Schritt das zweite Gebäckteil mittels eines Fügeverfahrens mit der Zwischenschicht verbunden wird. Bei diesem Verfahren ist das zweite Gebäckteil das untere Gebäckteil, wenn das erste Gebäckteil das obere Gebäckteil ist, und das zweite Gebäckteil das obere Gebäckteil, wenn das erste Gebäckteil das untere Gebäckteil ist. Es ist auch im Rahmen dieses Verfahrens möglich, die Seitenflächen der Zwischenschicht mit glatten oder ebenen Seitenflächen bereitzustellen, die in einer Ausführungsform parallel zu den korrespondierenden Seitenflächen des oberen Gebäckteils und des unteren Gebäckteils ausgebildet sind. Eine Möglichkeit, wie dies bewerkstelligt werden kann, ist beispielsweise in der europäischen Patentanmeldung EP 2 829 181 A1 beschrieben, deren Offenbarung hierin durch Bezugnahme aufgenommen wird. Die Ausgestaltung des oberen Gebäckteils, des unteren Gebäckteils und der Zwischenschicht ist ansonsten so, wie vorstehend im Zusammenhang mit der erfindungsgemäßen Dauerbackware beschrieben.

Es ist im Rahmen der erfindungsgemäßen Verfahren zur Herstellung der erfindungsgemäßen Dauerbackware, dass die Zwischenschicht hinsichtlich ihrer Seitenflächen dem für deren Materialien günstigen Herstellungsverfahren angepasst werden kann. Bei der Herstellung aus Schokolade kann es bevorzugt sein, die Seitenflächen geneigt auszuführen, bspw. mit einer Neigung von 4 Grad zur Senkrechten auf der Horizontalfläche, d.h. der dem ersten und zweiten Gebäckteil zugewandten Oberfläche der Zwischenschicht.

Es wird von den Fachleuten anerkannt werden, dass das obere Gebäckteil und das untere Gebäckteil jeweils und unabhängig von einander in Form von Keksen, Waffeln oder anderen Formen von Dauerbackwaren ausgebildet sein können, wobei hinsichtlich der Zusammensetzung der Gebäckteile, deren Festigkeit und Oberflächenbeschaffenheit keine Beschränkungen bestehen, solange dadurch die erfindungsgemäße Dauerbackware, wie sie hierin in ihren verschiedenen Ausführungsformen offenbart ist, realisiert werden kann.

In einer weiteren Ausführungsform der erfindungsgemäßen Dauerbackware ist vorgesehen dass die erfindungsgemäße Dauerbackware noch ein oder mehrere weitere Gebäckteile umfasst, wobei diese einen oder mehreren weiteren Gebäckteile bevorzugter Weise so ausgeführt sind, wie hierin für das obere Gebäckteil und/oder das untere Gebäckteil offenbart. Es ist dabei im Rahmen der vorliegenden Erfindung, dass das eine oder die mehreren weiteren Gebäckteile durch jeweils eine weitere Zwischenschicht von einem anderen Gebäckteil der erfindungsgemäßen Dauerbackware getrennt ist/sind, wobei diese eine weitere Zwischenschicht bevorzugter Weise so ausgeführt ist, wie hierin für die zwischen dem oberen Gebäckteil und dem unteren Gebäckteil angeordnete Zwischenschicht offenbart. Derartige weitere Gebäckteile und weitere Zwischenschichten können bei der erfindungsgemäßen Dauerbackware einmalig oder mehrfach an dem oberen Gebäckteil und/oder an dem unteren Gebäckteil angeordnet sein.

Die vorliegende Erfindung wir im Folgenden unter Bezugnahme auf die beigefügten Zeichnungen und Beispiele weiter beschrieben werden, woraus weitere Merkmale, Ausführungsformen und Vorteile entnommen werden können.

Dabei zeigt
- Fig. 1: eine vereinfachte perspektivische, nicht maßstabsgetreue Darstellung einer Ausführungsform der erfindungsgemäßen Dauerbackware;
- Fig. 2: eine vereinfachte Schnittansicht durch die in Fig. 1 gezeigte Ausführungsform der erfindungsgemäßen Dauerbackware;
- Fig. 3: eine Darstellung der in den Fig. 1 und 2 gezeigten Zwischenschicht;
- Fig. 4: eine Darstellung eines ersten Herstellungsschrittes durch Fügen eines oberen Gebäckteils mit der Zwischenschicht; und
- Fig. 5: eine Darstellung eines möglichen zweiten Herstellungsschrittes durch Aufbringen von Zusatzstoffen auf ein unteres Gebäckteil vor dem Auflegen der in Fig. 4 gezeigten Anordnung.

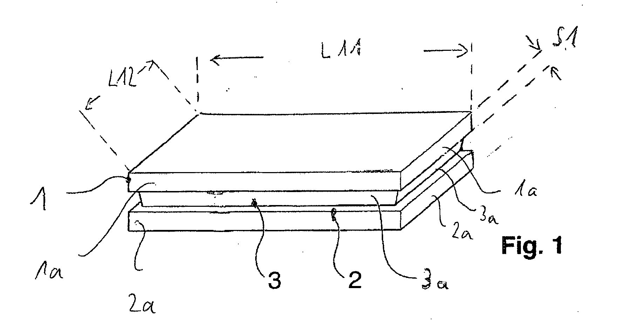

Fig. 1 zeigt in vereinfachter, schematischer Darstellung eine Ausführungsform einer erfindungsgemäßen Dauerbackware. Diese umfasst ein oberes Gebäckteil 1 sowie ein unteres Gebäckteil 2. In der dargestellten Ausführungsform ist das obere Gebäckteil 1 und das untere Gebäckteil 2 plattenförmig ausgebildet, wobei das obere Gebäckteil 1 ebene oder glatte Seitenflächen 1a und das untere Gebäckteil 2 ebene oder glatte Seitenflächen 2a aufweist. Das obere Gebäckteil 1 und das untere Gebäckteil 2 weisen, in Draufsicht, eine rechteckige Form auf. Es wird anerkannt werden, dass die Seitenflächen 1a und 2a glatt, gezahnt, gerippt, oder in anderer Weise strukturiert sein können. Gleiches gilt für die obere Oberfläche des oberen Gebäckteils 1 und die untere Oberfläche des unteren Gebäckteils 2. Das obere Gebäckteil 1 und das untere Gebäckteil 2 können in Form von plattenförmigen Keksen ausgebildet sein.

Die formstabile, mit dem oberen Gebäckteil 1 und dem unteren Gebäckteil 2 mittels eines Fügeverfahrens und insbesondere Kleben verbundene Zwischenschicht 3 ist in der dargestellten Ausführungsform ebenfalls als rechteckige Platte ausgeführt und weist ebene oder glatte Seitenflächen 3a auf. Die Seitenflächen 3a können in alternativen Ausführungsformen, gezahnt, gerippt, oder in anderer Weise strukturiert sein.

Beispielhaft sind in Fig. 1 die Kantenlängen L11 und L12 für das obere Gebäckteil 1 und die Stärke S1 für das obere Gebäckteil 1 angegeben.

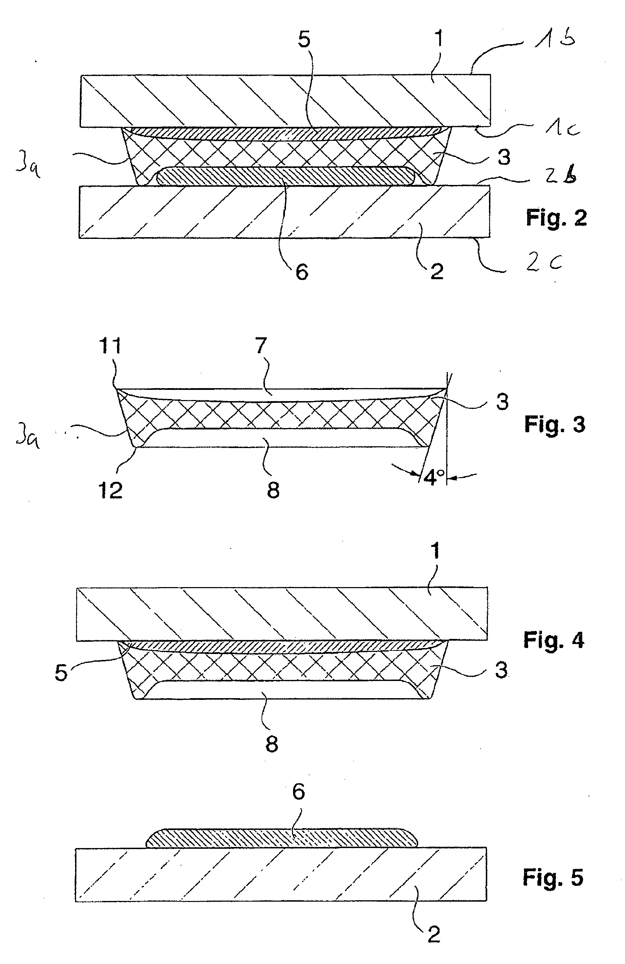

Wie die Schnittansichten von Fig. 2 und 3 zeigen, weist die Zwischenschicht 3 jeweils ebene Seitenflächen 3a auf, welche in einem Winkel, beispielsweise 4 Grad, zur Senkrechten auf die Plattenfläche des unteren Gebäckteils 2 geneigt sind. Durch diese Neigung der Seitenflächen 3a ist zum einen sichergestellt, dass die Zwischenschicht 3 gut ausgeformt werden kann, und zum anderen ergibt sich ein sehr ansprechendes optisches Erscheinungsbild. In Fig. 2 sind auch, im Querschnitt, die obere Oberfläche 1b des oberen Gebäckteils 1, die untere Oberfläche 1c des unteren Gebäckteils 1, die obere Oberfläche 2b des unteren Gebäckteils 2 und die untere Oberfläche 2c des unteren Gebäckteils 2 dargestellt.

Die Zwischenschicht 3, die in der figurengegenständlichen Ausführungsform in der Form einer Schokoladentafel vorliegt, ist weiterhin mit einer oberen Ausnehmung 7 und einer unteren Ausnehmung 8 versehen. Die obere Ausnehmung 7 kann durch die Herstellung der Zwischenschicht 3 erzeugt werden, nämlich durch einen Schüttelrand 11, welcher sich bei der Herstellung der als Zwischenschicht verwendeten Schokoladentafel ausbildet. Die untere Ausnehmung 8 wird durch einen Wulst 12 gebildet, der durch die Gussform der Schokoladentafel erzeugt wird.

Aus den Fig. 2 und 3 ergibt sich somit, dass die Ausnehmungen 7 und 8 ein ausreichendes Volumen bereitstellen, um jeweils ein oberes Fügematerial 5 und ein unteres Fügematerial 6 einzubringen, mit dessen Hilfe ein Fügen oder Verbinden der Zwischenschicht 3 mit dem oberen Gebäckteil 1 und dem unteren Gebäckteil 2 möglich wird.

In Fig. 4 ist ein erster Herstellungsschritt einer Ausführungsform der erfindungsgemäßen Dauerbackware gezeigt. Nach dem Herstellen der Zwischenschicht 3 wird in deren Ausnehmung 7 das obere Fügematerial 5 eingebracht. Das Einbringen des Fügematerials 5 kann flächig, punktförmig oder streifenförmig erfolgen. Das Fügematerial 5 kann, wenn die Zwischenschicht 3 aus Schokolade hergestellt ist, aus dem gleichen Schokoladenwerkstoff bestehen. Nachfolgend wird das obere Gebäckteil 1 exakt positioniert aufgesetzt und angedrückt, so dass es auf den Schüttelrand 11 aufliegt. Hierdurch ist eine plane, exakte Zuordnung zwischen dem oberen Gebäckteil 1 und der Zwischenschicht 3 sichergestellt.

Nachdem das obere Fügematerial 5 erstarrt oder ausgehärtet ist, ist es möglich, die in Fig. 4 gezeigte Anordnung um 180 Grad zu wenden. In die gemäß Fig. 4 untere Ausnehmung 8 kann dann das Fügematerial 6 eingebracht werden. Nachfolgend ist es möglich, analog zu dem in Fig. 4 gezeigten Herstellungsverfahren, das untere Gebäckteil 2 exakt positioniert aufzulegen, so dass dieses auf dem Randwulst 12 aufliegt und ebenfalls exakt positioniert ist.

Alternativ hierzu kann auch so vorgegangen werden, dass, wie in Fig. 5 gezeigt, auf das untere Gebäckteil 2 das Fügematerial 6 aufgebracht wird, woraufhin die in Fig. 4 gezeigte Anordnung exakt positioniert aufgesetzt wird.

Wie sich aus der obigen Beschreibung ergibt, ist es erfindungsgemäß möglich, die vorgefertigte, plattenförmige Zwischenschicht 3 exakt auszubilden und zwischen den beiden Gebäckteilen zu positionieren, wobei die Seitenflächen 3a der Zwischenschicht 3 exakt plan und glänzend sein können, so dass die Dauerbackware höchste optische Anforderungen erfüllt.

### Beispiel: Sensorische Analyse der erfindungsgemäßen Dauerbackware

Verschiedene Ausführungsformen der erfindungsgemäßen Dauerbackware wurden im Rahmen einer sensorischen Analyse mit einer Dauerbackware verglichen, die mit Ausnahme der Absolutgrößen bezüglich Länge und Breite und dem Verhältnis von erster zu zweiter Kantenlänge ansonsten praktisch identisch mit den Ausführungsformen der erfindungsgemäßen Dauerbackwaren waren. Die sensorische Analyse wurde auf der Grundlage von DIN 10974 "Sensorische Analyse - Verbrauchertests" durchgeführt. An der sensorischen Analyse nahmen 30 Tester teil.

Die Analyse wurde an zwei Tagen durchgeführt. Die Proben des ersten Tages basierten auf einer besonders bevorzugten Ausführungsform der erfindungsgemäßen Dauerbackware, im Folgenden auch als Referenz bezeichnet, die wie folgt aufgebaut war:
Das erste Gebäckteil und das zweite Gebäckteil der Referenz wiesen jeweils eine Länge von 52,0 ± 0,5 mm, eine Breite von 25,0 ± 0,5 mm und eine Höhe von 4,8 mm ± 0,2 mm, die aus Schokolade hergestellte Zwischenschicht der Referenz wies eine Länge von 50,0 mm, eine Breite von 23,0 mm und eine Höhe von 3,2 mm auf, und die Referenz somit insgesamt eine Länge von 52,5 mm ± 0,5 mm, eine Breite von 25,0 mm ± 0,5 mm und eine Höhe von 12,8 mm ± 0,4 mm; der Gewichtsanteil der Zwischenschicht und damit der Schokolade betrug bei der Referenz etwa 41 Gew.-%.

Die neben der Referenz getesteten Proben unterschieden sich von dieser bezüglich des Verhältnisses der ersten Kantenlänge des oberen Gebäckteils zu der zweiten Kantenlänge des oberen Gebäckteils ("Kantenlängenverhältnis") und, nachdem bei der Referenz wie auch bei allen untersuchten Proben das obere Gebäckteil und das untere Gebäckteil identisch ausgebildet waren, somit auch bezüglich das des Kantenlängenverhältnisses des unteren Gebäckteils. Bei den Proben des ersten Tages betrug die Länge 52 mm und die getesteten Kantenlängenverhältnisse KV 1,5 (Probe "457 FR"), 1,8 (Probe "698 FR"), 2,1 (Referenz), 2,4 (Probe "316 FR") und 2,7 (Probe "170 FR").

Ergebnisse der sensorischen Analyse dieser Proben sind in der folgenden Tabelle 1 als % der Antworten der Tester dargestellt.

**Tabelle 1:**

| | Referenz (KV = 2.1) | 316 FR (KV = 2,4) | 457 FR (KV = 1,5) | 170 FR (KV = 2,7) | 698 FR (KV = 1,8) |
|---|---|---|---|---|---|
| | | | | | |
| **Produktgröße** | | | | | |
| viel zu klein | | | | 6,25 | |
| etwas zu klein | 6,25 | 34,38 | | 53,13 | 3,13 |
| gerade recht | 84,38 | 53,12 | 3,13 | 40,62 | 56,25 |
| etwas zu groß | 9,37 | 12,50 | 43,75 | | 37,50 |
| viel zu groß | | | 53,12 | | 3,13 |
| **Eindruck im Mund** | 75,00 | 74,00 | 31,00 | 61,00 | 73,00 |
| **Größe im Mund** | | | | | |
| viel zu klein | | | | 6,25 | |
| etwas zu klein | 6,25 | 25,00 | | 56,25 | |
| gerade recht | 71,88 | 56,25 | | 34,38 | 50,00 |
| etwas zu groß | 21,87 | 18,75 | 34,38 | | 43,75 |
| viel zu groß | | | 65,62 | | 6,25 |
| **Kaueindruck** | 81,00 | 77,00 | 50,00 | 73,00 | 72,00 |
| **Produktmenge im Mund** | | | | | |
| viel zu wenig | | | | 6,25 | |
| etwas zu wenig | 3,13 | 18,75 | | 50,00 | |
| gerade recht | 75,00 | 65,63 | | 43,75 | 53,13 |
| etwas zu viel | 21,87 | 12,50 | 18,75 | | 40,63 |
| viel zu viel | | | 81,25 | | 6,25 |
| **Textur** | 88,00 | 78,00 | 65,00 | 78,00 | 75,00 |
| **Mundgefühl** | 83,00 | 76,00 | 54,00 | 72,00 | 73,00 |
| **Zufriedenheit** | 88,00 | 75,00 | 50,00 | 70,00 | 74,00 |
| **Gesamteindruck** | 89,00 | 76,00 | 56,00 | 70,00 | 74,00 |

Wie aus Tabelle 1 ersichtlich war die Referenz bei allen Kriterien den anderen Proben überlegen. Ein von 2,1 verschiedenes Kantenverhältnis bei der erfindungsgemäßen Dauerbackware lieferte bei einem Kantenverhältnis von 1,8 und 2,4 immer noch sehr gute Ergebnisse. Ein davon deutlich in beide Richtungen abweichendes Kantenverhältnis von 1,5 und 2,7 vermochte die Mehrzahl der Tester jedoch nicht mehr zu überzeugen.

Die Proben des zweiten Tages basierten wiederum auf der vorstehenden Referenz. Die neben der Referenz getesteten Proben unterschieden sich von dieser bezüglich der ersten Kantenlänge des oberen Gebäckteils und der zweiten Kantenlänge des oberen Gebäckteils, wobei ausgehend von dem am ersten Tag als besonders vorteilhaft ermittelten Kantenlängenverhältnisses von 2,1 bei den verschiedenen Proben die folgenden ersten und zweiten Kantenlängen sowohl für das obere als auch das untere Gebäckteil, welches identisch ausgebildet war wie das obere Gebäckteil, realisiert waren: 45 mm x 21 mm (Probe "316 MO"), 60 x 29 mm (Probe "457 MO"), 75 x 36 mm (Probe "170 MO"), und 30 x 14 mm (Probe "698 MO").

Ergebnisse der sensorischen Analyse dieser Proben sind in der folgenden Tabelle 2 als % der Antworten der Tester dargestellt.

**Tabelle 2:**

| | Referenz | 316 MO | 457 MO | 170 MO | 698 MO |
|---|---|---|---|---|---|
| | | | | | |
| **Produktgröße** | | | | | |
| viel zu klein | | 3,22 | | | 70,97 |
| etwas zu klein | 3,22 | 64,52 | | | 29,03 |
| gerade recht | 90,32 | 32,26 | 19,35 | 3,22 | |
| etwas zu groß | 6,45 | | 58,06 | 9,68 | |
| viel zu groß | | | 22,58 | 87,1 | |
| **Eindruck im Mund** | 76 | 69 | 40 | 29 | 60 |
| **Größe im Mund** | | | | | |
| viel zu klein | | | | | 64,52 |
| etwas zu klein | 3,22 | 58,06 | | | 35,48 |
| gerade recht | 77,42 | 32,26 | 9,68 | 3,22 | |
| etwas zu groß | 19,35 | 9,68 | 29,03 | 3,22 | |
| viel zu groß | | | 61,29 | 93,58 | |
| **Kaueindruck** | 83 | 76 | 48 | 35 | 61 |
| **Produktmenge im Mund** | | | | | |
| viel zu wenig | | | | | 64,52 |
| etwas zu wenig | 6,45 | 61,29 | | | 32,26 |
| gerade recht | 74,19 | 32,36 | 9,68 | 3,22 | 3,22 |
| etwas zu viel | 19,35 | 6,45 | 29,03 | 6,45 | |
| viel zu viel | | | 61,29 | 90,33 | |
| **Textur** | 87 | 79 | 65 | 55 | 74 |
| **Mundgefühl** | 86 | 77 | 53 | 38 | 67 |
| **Zufriedenheit** | 87 | 69 | 50 | 36 | 54 |
| **Gesamteindruck** | 87 | 71 | 52 | 34 | 54 |

Wie aus Tabelle 2 ersichtlich war die Referenz bei allen Kriterien den anderen Proben überlegen. Eine Kantenlänge der längeren der beiden Kanten des oberen bzw. unteren Gebäckteils von mehr als 60 mm und weniger als 40 mm ging mit einem deutlichen Verlust der Akzeptanz beiden Testen einher. Zwar war eine Länge der längeren Kante von 30 mm bei dem gegebenen Kantenverhältnis von 2,1 bezüglich einiger der oralen Kriterien, nämlich Kaueindruck, Textur und Mundgefühl für einen erheblichen Teil der Tester noch akzeptabel, jedoch litt diese Probe an einer sehr geringen Akzeptanz bei den Testern bezüglich der weiteren oralen Kriterien Produktmenge im Mund, Größe im Mund und bei dem rein optischen Kriterium der Produktgröße. Im Lichte der in Tabelle 2 präsentierten Ergebnisse ist somit Kantenlänge der längeren Kante des oberen bzw. unteren Gebäckteiles und damit der Dauerbackware insgesamt, von 40 mm bis 60 mm und insbesondere von 45 bis 60 mm besonders vorteilhaft.

Die in der vorstehenden Beschreibung, den Ansprüchen sowie den Zeichnungen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Dauerbackware mit einem oberen Gebäckteil (1), einem unteren Gebäckteil (2) und einer Zwischenschicht (3), wobei
das obere Gebäckteil (1) eine Stärke S1 und in Draufsicht eine rechteckige Form aufweist, wobei die rechteckige Form definiert ist durch eine erste Kante mit einer Kantenlänge L11 und einer zu der ersten Kante mit einer Kantenlänge L11 senkrechten zweiten Kante mit einer Kantenlänge L12, die erste Kantenlänge L11 größer ist als die zweite Kantenlänge L12, die erste Kantenlänge L 11 60 mm oder weniger beträgt und das Verhältnis erste Kantenlänge L11 zu zweiter Kantenlänge L12 1,8 bis 2,4 beträgt;
das untere Gebäckteil (2) eine Stärke S2 und in Draufsicht eine rechteckige Form aufweist, wobei die rechteckige Form definiert ist durch eine erste Kante mit einer Kantenlänge L21 und einer zu der ersten Kante mit einer Kantenlänge L21 senkrechten zweiten Kante mit einer Kantenlänge L22, die erste Kantenlänge L21 größer ist als die zweite Kantenlänge L22, die erste Kantenlänge L21 60 mm oder weniger beträgt und das Verhältnis erste Kantenlänge L21 zu zweiter Kantenlänge L22 1,8 bis 2,4 beträgt; und
die Zwischenschicht (3) formstabil ist und zwischen dem oberen Gebäckteil (1) und dem unteren Gebäckteil (2) angeordnet ist, wobei die Kantenlänge L11 40 mm bis 60 mm, bevorzugter Weise 45 mm bis 60 mm, bevorzugter Weise 50 mm bis 55 mm und am bevorzugtesten 52 mm beträgt und/oder die Kantenlänge L21 40 mm bis 60 mm, bevorzugter Weise 45 mm bis 60 mm, bevorzugter Weise 50 mm bis 55 mm und am bevorzugtesten 52 mm beträgt.

2. Dauerbackware nach Anspruch 1, wobei das Verhältnis erste Kantenlänge L11 zu zweiter Kantenlänge L12 1,9 bis 2,3, bevorzugter Weise 2,0 bis 2,2 und bevorzugterer Weise 2,1 beträgt, und/oder das Verhältnis erste Kantenlänge L21 zu zweiter Kantenlänge L22 1,9 bis 2,3, bevorzugter Weise 2,0 bis 2,2 und bevorzugterer Weise 2,1 beträgt.

3. Dauerbackware nach einem der Ansprüche 1 bis 2, wobei die erste Kantenlänge L11 und die ersten Kantenlänge L21 gleich sind.

4. Dauerbackware nach einem der Ansprüche 1 bis 3, wobei das Verhältnis erste Kantenlänge L11 zu zweiter Kantenlänge L12 gleich dem Verhältnis erste Kantenlänge L21 zu zweiter Kantenlänge L22 ist.

5. Dauerbackware nach einem der Ansprüche 1 bis 4, wobei die Stärke S1 3,6 mm bis 6,0 mm, bevorzugter Weise 4,1 mm bis 5,5 mm, bevorzugterer Weise 4,5 mm bis 5,1 mm und am bevorzugtesten 4,8 mm beträgt und/oder die Stärke S2 3,6 mm bis 6,0 mm, bevorzugter Weise 4,1 mm bis 5,5 mm, bevorzugterer Weise 4,5 mm bis 5,1 mm und am bevorzugtesten 4,8 mm beträgt.

6. Dauerbackware nach einem der Ansprüche 1 bis 5, wobei die Zwischenschicht (3) mit dem oberen Gebäckteil (1) und dem unteren Gebäckteil (2) mittels eines Fügeverfahrens verbunden ist.

7. Dauerbackware nach einem der Ansprüche 1 bis 6, wobei die Zwischenschicht (3) ein Material umfasst, das ausgewählt ist aus der Gruppe umfassend Schokolade, fetthaltige Masse, Karamell, Käse, Gelee, Marmelade und Mischungen davon.

8. Dauerbackware nach einem der Ansprüche 1 bis 7, wobei die Zwischenschicht (3) mindestens eine sichtbare Seitenfläche (3a) umfasst, wobei die mindestens eine Seitenfläche (3a) eine glatte Oberfläche umfasst.

9. Dauerbackware nach einem der Ansprüche 1 bis 8, wobei das obere Gebäckteil (1) mindestens eine Seitenfläche (1a) umfasst, das untere Gebäckteil (2) mindestens eine Seitenfläche (2a) umfasst, und die Zwischenschicht (3) mindestens eine Seitenfläche (3a) umfasst, und wobei die mindestens eine Seitenfläche (1a), die mindestens eine Seitenfläche (2a) und die mindestens eine Seitenfläche (3a) parallel zu einander sind, oder wobei die mindestens eine Seitenfläche (1a), die mindestens eine Seitenfläche (2a) und die mindestens eine Seitenfläche (3a) mit einander fluchten, oder die mindestens eine Seitenfläche (1a) und/oder die mindestens eine Seitenfläche (2a) relativ zu der minestens einen Seitenfläche (3a) vorstehen, oder die mindestens eine Seitenfläche (3a) relativ zu der mindestens einen Seitenfläche (1a) und/oder relativ zu der mindestens einen Seitenfläche (2a) vorsteht.

10. Dauerbackware nach einem der Ansprüche 1 bis 9, wobei die Zwischenschicht (3) eine Stärke S3 und in Draufsicht eine rechteckige Form aufweist, wobei die rechteckige Form definiert ist durch eine erste Kante mit einer Kantenlänge L31 und einer zu der ersten Kante mit einer Kantenlänge L31 senkrechten zweiten Kante mit einer Kantenlänge L32, die erste Kantenlänge L31 größer ist als die zweite Kantenlänge L32, die erste Kantenlänge L31 60 mm oder weniger beträgt und das Verhältnis erste Kantenlänge L31 zu zweiter Kantenlänge L32 1,8 bis 2,4 beträgt.

11. Dauerbackware nach einem der Ansprüche 1 bis 10, wobei die Zwischenschicht (3) eine Stärke S3 und in Draufsicht eine rechteckige Form aufweist, wobei die rechteckige Form definiert ist durch eine erste Kante mit einer Kantenlänge L31 und einer zu der ersten Kante mit einer Kantenlänge L31 senkrechten zweiten Kante mit einer Kantenlänge L32, die erste Kantenlänge L31 größer ist als die zweite Kantenlänge L32, und die Kantenlänge L31 und/oder die Kantenlänge L32 gegenüber der Kantenlänge L11 und/oder der Kantenlänge L12 und/oder der Kantenlänge L21 und/oder der Kantenlänge L22 um 2 bis 8 %, bevorzugter Weise um 3 bis 6 % und bevorzugterer Weise um 4 % entweder größer oder kleiner ist.

12. Dauerbackware nach Anspruch 11, wobei das Verhältnis der ersten Kantenlänge L31 zu der zweiten Kantenlänge L32 1,8 bis 2,4, bevorzugter Weise 1,9 bis 2,3, bevorzugterer Weise 2,0 bis 2,2 und am bevorzugtesten 2,1 beträgt, und wobei die Kantenlänge L31 40 mm bis 60 mm beträgt und bevorzugter Weise 45 mm bis 60 mm beträgt, bevorzugter Weise 45 mm bis 55 mm und bevorzugter Weise 50 mm beträgt.

13. Dauerbackware nach einem der Ansprüche 10 bis 12, wobei die Stärke S3 der Zwischenschicht (3) 2,4 mm bis 4,0 mm, bevorzugter Weise 2,7 mm bis 3,7 mm, bevorzugterer Weise 3,0 mm bis 3,4 mm und am bevorzugtesten 3,2 mm beträgt.

14. Dauerbackware nach einem der Ansprüche 1 bis 13, wobei die Masse der Zwischenschicht (3) an der Gesamtmasse der Dauerbackware 20 bis 80 Gew.-%, bevorzugter Weise 30 bis 70 Gew.-%, bevorzugterer Weise 35 bis 55 Gew.-% und am bevorzugtesten 41 Gew.-% ± 5 Gew.-% beträgt, wobei bevorzugter Weise die Zwischenschicht (3) aus Schokolade besteht.

15. Verfahren zur Herstellung einer Dauerbackware umfassend ein oberes Gebäckteil (1), ein unteres Gebäckteil (2) und eine dazwischen angeordnete formstabile Zwischenschicht (3), wobei das Verfahren umfasst:
- Bereitstellen des oberen Gebäckteils (1), des unteren Gebäckteils (2) und der Zwischenschicht (3) als separate Produkte, und
- Verbinden des oberen Gebäckteils (1), des unteren Gebäckteils (2) und der Zwischenschicht (3), oder
- Bereitstellen eines ersten Gebäckteils, wobei die Zwischenschicht mit dem ersten Gebäckteil verbunden ist und das erste Gebäckteil entweder das obere Gebäckteil (1) oder das untere Gebäckteil (2) ist, und
- Verbinden der mit dem ersten Gebäckteil verbundenen Zwischenschicht (3) mit einem zweiten Gebäckteil, wobei das zweite Gebäckteil das untere Gebäckteil (2) in dem Fall ist, dass das erste Gebäckteil das obere Gebäckteil (1) ist, und wobei das zweite Gebäckteil das obere Gebäckteil (1) in dem Fall ist, dass das erste Gebäckteil das untere Gebäckteil ist;
wobei die Zwischenschicht (3) zwischen dem oberen Gebäckteil (1) und dem unteren Gebäckteil (2) angeordnet ist, die Dauerbackware eine Dauerbackware nach einem der Ansprüche 1 bis 14 ist, und das Verbinden mittels eines Fügeverfahrens erfolgt.
